Europäisches Patentamt

European Patent Office

Office européen des brevets

(19)

(11) Veröffentlichungsnummer: **0 490 146 A2**

## EUROPÄISCHE PATENTANMELDUNG

(21) Anmeldenummer: **91120006.1**

(22) Anmeldetag: **23.11.91**

(51) Int. Cl.⁵: **B23K 26/02**

(30) Priorität: **10.12.90 DE 4039318**

(43) Veröffentlichungstag der Anmeldung:
**17.06.92 Patentblatt 92/25**

(84) Benannte Vertragsstaaten:
**BE DE FR GB IT NL**

(71) Anmelder: **Fried. Krupp Gesellschaft mit beschränkter Haftung**
Altendorfer Strasse 103
W-4300 Essen 1(DE)

(72) Erfinder: **Müller, Reinhard, Dr.-Ing.**
Klapperstrasse 97
W-4300 Essen 14(DE)
Erfinder: **Hangmann, Norbert, Dipl.-Phys.**
Sorpestrasse 8
W-4200 Oberhausen(DE)

(54) Einrichtung zur Erfassung der Höhenlage einer Laserbearbeitungsvorrichtung bezüglich eines Werkstücks.

(57) Einrichtung zur Erfassung der Höhenlage einer Laserbearbeitungsvorrichtung bezüglich eines Werkstücks

Die Erfindung bezieht sich auf eine Erfassungseinrichtung mit einer Lasereinheit zur Erzeugung eines Strahlungsflecks auf der Werkstückoberfläche, mit einer Sensoreinheit, in der über einen zwischengeschalteten Filter das vom Strahlungsfleck ausgehende Laserlicht aufgefangen und auf eine bezüglich der Werkstückoberfläche geneigte Beobachtungsebene abgebildet wird, und mit Detektoren, mittels derer die Abbildung in der Beobachtungsebene in Signale umgewandelt wird, aufgrund welcher Änderungen des Abstands zwischen der Beobachtungsebene und dem Strahlungsfleck feststellbar sind.

Mit der Erfindung wird der Vorschlag unterbreitet, in der Beobachtungsebene (14d) zwei Lichtleitereinheiten (16, 17) derart anzuordnen, daß mit der Zunahme bzw. Abnahme des Abstandes im Vergleich zu einem Soll-Abstand die obere bzw. untere Lichtleitereinheit (16 bzw. 17) stärker als die jeweils andere Lichtleitereinheit mit Laserlicht beaufschlagt ist.
Für die Abstandserfassung bzw. für die Justierung der Sensoreinheit (14) sind die Ausgänge (16b, 17b) der Lichtleitereinheiten (16, 17) derart umsteckbar, daß sie entweder an die Detektoren (20, 21) oder an lichtdurchlässige Verbindungselemente (24) angeschlossen sind, die mittels einer getrennt zuschaltbaren Justier-Lichtquelle (25) ausgeleuchtet werden können. Die Ausgänge der Detektoren (20, 21) sind über eine Differenzschaltung (26) zusammengefaßt, welche das Differenzsignal DS "Null" erzeugt, falls die Ist-Lage der Werkstückoberfläche (2a) mit deren Soll-Lage übereinstimmt.

FIG.1a

Einrichtung zur Erfassung der Höhenlage einer Laserbearbeitungsvorrichtung bezüglich eines Werkstücks

Die Erfindung betrifft eine Einrichtung zur Erfassung der Höhenlage einer Laserbearbeitungsvorrichtung bezüglich eines Werkstücks, mit einer Lasereinheit zur Erzeugung eines Strahlungsflecks auf der Oberfläche des Werkstücks, mit einer Sensoreinheit, in der über einen zwischengeschalteten Filter das vom Strahlungsfleck ausgehende Laserlicht aufgefangen und auf eine bezüglich der Werkstückoberfläche geneigte Beobachtungsebene abgebildet wird, und mit Detektoren, mittels derer die Abbildung in der Beobachtungsebene in Signale umgewandelt wird, aufgrund welcher Änderungen des Abstands zwischen der Beobachtungsebene und dem Strahlungsfleck feststellbar sind.

Bei einer gattungsähnlichen Einrichtung - die zur Automatisierung des Lichtbogenschweißens beitragen soll - wird die von der Werkstückoberfläche reflektierte Strahlung von einer Sensoreinheit erfaßt, die sich aus einem schmalbandigen Spektralfilter, einer Optik und einer aus Einzeldetektoren aufgebauten Detektoreinheit zusammensetzt. An dieser läßt sich der Winkel der einfallenden Strahlung ablesen und daraus die Entfernung zur Werkstückoberfläche berechnen. Der schmalbandige Spektralfilter ist dabei derart ausgelegt, daß die Einzeldetektoren nur die Laserstrahlung empfangen und für alle anderen Strahlungsquellen praktisch blind sind (Sonderdruck aus "Technisches Messen" 51/1984, Heft 7/8, Seite 259 bis 263).

Der Erfindung liegt die Aufgabe zugrunde, eine Einrichtung zur Erfassung der Höhenlage einer Laserbearbeitungsvorrichtung bezüglich eines Werkstücks zu entwickeln, die einerseits die Justierung der Sensoreinheit erleichtert und andererseits mit vertretbarem Aufwand die Anpassung der Höhenlage der Laserbearbeitungsvorrichtung an das zu bearbeitende Werkstück ermöglicht.
Die Einrichtung soll dabei insbesondere beim Laserschweißen zum Einsatz kommen; sie soll jedoch auch dazu geeignet sein, andere Bearbeitungsvorgänge unter Verwendung von Laserstrahlen zu ermöglichen bzw. zu verbessern, beispielsweise Schneid- oder Oberflächenbehandlungsvorgänge. Unter der Bezeichnung "Werkstück" sind, abhängig von der Art des Bearbeitungsvorgangs, ggf. auch meherere zusammenwirkende Werkstücke bzw. Werkstückbestandteile zu verstehen: Beim Laserschweißen besteht das Werkstück dementsprechend aus zwei Werkstückbestandteilen, zwischen denen eine geeignet ausgebildete Schweißfuge verläuft.

Die gestellte Aufgabe wird durch eine Einrichtung gelöst, welche die Merkmale des Anspruchs 1 aufweist.
Die eingangs erwähnte, gattungsgemäße Einrichtung weist dabei zwei in Richtung der Arbeitsbewegung der Laserbearbeitungsvorrichtung hintereinanderliegende Lichtleitereinheiten auf, deren Eingangsebene sich in der Beobachtungsebene der Sensoreinheit befindet und die derart angeordnet sind, daß mit einer Abstandsänderung im Vergleich zu einem Soll-Abstand die Eingangsebene der einen oder der anderen Lichtleitereinheit stärker mit Laserlicht beaufschlagt ist: Falls also der Ist-Abstand der Laserbearbeitungsvorrichtung mit einem vorgegebenen Soll-Abstand übereinstimmt, ist die Eingangsebene beider Lichtleitereinheiten in gleicher Weise mit dem von der Werkstückoberfläche ausgehenden Laserlicht ausgeleuchtet.

Die Ausgänge der Lichtleitereinheiten sind für die Abstandserfassung bzw. für die Justierung der Sensoreinheit derart umsteckbar, daß sie entweder an die bereits erwähnten Detektoren oder an lichtdurchlässige Verbindungselemente angeschlossen sind, die mittels einer getrennt zuschaltbaren Justier-Lichtquelle ausgeleuchtet werden können: Im letztgenannten Betriebszustand lassen sich die Lichtleitereinheiten und die Sensoreinheit in gegenüber dem Meßbetrieb umgekehrter Richtung dazu einsetzen, auf dem Werkstück ein Abbild der Lichtleitereinheiten zu erzeugen und dadurch die Ausrichtung der Sensoreinheit bezüglich des Werkstücks zu erleichtern; dies kann nämlich in einfacher Weise dadurch geschehen, daß die Mittellinie des Abbildes der Lichtleitereinheiten mit dem Mittelpunkt des auf der Werkstückoberfläche erzeugten Strahlungsflecks zur Deckung gebracht wird.
Um eine von Störeinflüssen weitgehend unabhängige Aussage über die Höhenlage der Laserbearbeitungsvorrichtung gewinnen zu können, sind die Ausgänge der Detektoren - die insbesondere als Fotodioden ausgebildet sein können - über eine Differenzschaltung zusammengefaßt, welche das Differenzsignal "Null" erzeugt, falls die Ist-Lage der Werkstückoberfläche mit deren Soll-Lage übereinstimmt.

Aus der Größenordnung und dem Vorzeichen des Differenzsignals läßt sich die vorhandene Abstandsabweichung ermitteln mit der Möglichkeit, die Höhenlage der Laserbearbeitungsvorrichtung in der erforderlichen Weise zu korrigieren; dies kann in einfacher Weise dadurch geschehen, daß über das Differenzsignal als Regelgröße ein die Höhenlage beeinflussender Verstellantrieb angesteuert wird.

Der Erfindungsgegenstand ist dadurch weiter ausgestaltet, daß die Querschnitte der Lichtleitereinheiten übereinstimmen und größer sind als der Querschnitt des mittels einer Optik abgebildeten Strahlungsflecks (Anspruch 2); denkbar ist in diesem Zusammenhang die Verwendung von Lichtleitereinheiten, die jeweils lediglich einen Kunststoff-Lichtleiter mit einem Durchmesser im Millimeterbereich aufweisen: Der wirksame Querschnitt jeder Lichtleitereinheit ist dabei um ein Vielfaches größer als der Querschnitt des mittels einer Optik abgebildeten Strahlungsflecks auf der Werkstückoberfläche.

Die Lichtleitereinheiten können jedoch auch in der Weise ausgebildet sein, daß ihr Querschnitt jeweils aus kleinflächigen Lichtfasern zusammengesetzt ist (Anspruch 3); beispielsweise können Lichtfasern zum Einsatz kommen, deren Durchmesser allenfalls einige zehntel Millimeter beträgt.

Die Differenzschaltung umfaßt zweckmäßig eine Brückenschaltung, die einen Abgleich zwischen den beiden Lichtleitereinheiten ermöglicht (Anspruch 4); mittels der Brückenschaltung lassen sich etwa vorhandene Wirkunterschiede zwischen den Lichtleitereinheiten ausgleichen, die ggf. die Genauigkeit des Meßergebnisses beeinträchtigen.

Bei einer vorteilhaften Weiterbildung des Erfindungsgegenstandes wird der Strahlungsfleck mittels einer Meßlasereinheit erzeugt (Anspruch 5), die insbesondere von einer Laserdiode gebildet sein kann. Der mit dieser Ausführungsform erzielte Vorteil besteht darin, daß die Höhenlage unabhängig vom Betrieb der Arbeitslasereinheit bzw. einer Justierlasereinheit ermittelt werden kann; letztere ist ohnehin nur einsetzbar, solange die Arbeitslasereinheit nicht eingeschaltet ist. Zweckmäßigerweise ist die Meßlasereinheit derart an der Laserbearbeitungsvorrichtung angeordnet, daß der Strahlungsfleck zwischen 3 und 10 Millimeter vorlaufend vor dem mittels der Arbeitslasereinheit erzeugten Brennfleck liegt (Anspruch 6).

Die Meßgenauigkeit läßt sich ggf. dadurch weiter verbessern, daß der mittels der Meßlasereinheit erzeugte Strahlungsfleck seitlich versetzt zur mittels der Arbeitslasereinheit beaufschlagten Bearbeitungsstelle liegt (Anspruch 7); auf diese Weise lassen sich Störeinflüsse ausschließen, welche durch die Abtastung beispielsweise der Schweißfuge hervorgerufen werden.

Falls der Arbeitslasereinheit eine Justierlasereinheit zugeordnet ist, kann der von dieser erzeugte Justier-Strahlungsfleck dazu herangezogen werden, die Sensoreinheit in die für den Meßvorgang erforderliche Justierstellung zu bringen und in dieser zu arretieren (Anspruch 8). Der Rückgriff auf die Justierlasereinheit ist jedoch nur dann von Vorteil, wenn der von der Sensoreinheit erfaßte Strahlungsfleck während des Betriebs der Laserbearbeitungsvorrichtung von der Arbeitslasereinheit erzeugt wird (Anspruch 9); nur in diesem Fall kann auf den Einsatz einer zusätzlichen Meßlasereinheit verzichtet werden. Bei der Ausführungsform gemäß Anspruch 8 und 9 muß die Sensoreinheit nebst Filter derart ausgelegt sein, daß sie den Teil des Arbeitslaserlichtspektrums ausnützen kann, der mit dem Wellenbereich des Justierlaserlichts übereinstimmt.

Der Erfindungsgegenstand kann auch bei Laserbearbeitungsvorrichtungen mit einer Meßlasereinheit zur Anwendung kommen, deren Strahlungsfleck in vorgegebenen Zeitabständen quer über die Bearbeitungsstelle hinweg bewegbar ist. Die Lichtleitereinheiten derartiger Ausführungsformen weisen jeweils einen Querschnitt auf, dessen Breite quer zur Richtung der Arbeitsbewegung der Laserbearbeitungsvorrichtung zumindest ebenso groß ist wie der von der Abbildung des Strahlungsflecks ausgeführte Querhub (Anspruch 10). Auf diese Weise ist es möglich, auch bei sich bewegendem Strahlungsfleck jeweils die Höhenlage der Laserbearbeitungsvorrichtung zu ermitteln.

Die Erfindung läßt sich in besonders einfacher Weise an Laserbearbeitungsvorrichtungen mit einer einen optoelektronischen Detektor aufweisenden Sensoreinheit ausführen, über welche das von der Werkstückoberfläche reflektierte Laserlicht in ein Signal zur Nachführung der Laserbearbeitungsvorrichtung bezüglich der Nahtfuge umwandelbar ist. Bei derartigen Ausführungsformen können die Lichtleitereinheiten gleichzeitig Bestandteil der Sensoreinheit sein, und zwar insbesondere in der Weise, daß die Eingangsebene der Lichtleitereinheiten dem Detektor benachbart liegt (Anspruch 11). Die gegenseitige Anordnung kann dabei insbesondere so getroffen sein, daß die Eingangsebene der Lichtleitereinheiten mit der Einkopplungsebene des Detektors zusammenfällt (d. h. mit dessen der Werkstückoberfläche zugewandten Stirnseite).

Der mit dieser Ausgestaltung erzielte Vorteil ist darin zu sehen, daß auf die Verwendung einer besonderen Sensoreinheit verzichtet werden kann, welche auch die Eingangsebene der Lichtleitereinheiten aufnimmt.

Die zuvor erwähnte Ausführungsform kann dadurch weiter ausgestaltet sein, daß die Querschnitte der Lichtleitereinheiten jeweils halbkreisförmig ausgebildet sind und den Umfang des Detektors umschließen (Anspruch 12).

Eine Abweichung von einer vorgegebenen Höhenlage liegt dabei dann vor, wenn die Abbildung des Strahlungsflecks während dessen Querhub bezüglich der Trennfläche zwischen den beiden Lichtleitereinheiten asymmetrisch angeordnet ist.

Die Meßgenauigkeit läßt sich ggf. dadurch weiter verbessern, daß der Meßstrahl der Meßlasereinheit oder der Justierlasereinheit hinsichtlich seiner Intensität moduliert wird (Anspruch 13); durch die Modulation - vorzugsweise mit mindestens 50 kHz - können insbesondere Störeinflüsse seitens des Laserschweißplasmas und der Strahlung des Schmelzbades hinsichtlich ihrer Wirkung zumindest abgemildert werden.

Die Erfindung wird nachfolgend anhand mehrerer in der Zeichnung dargestellter Ausführungsbeispiele im einzelnen erläutert.

Es zeigen:

Fig. 1a    stark schematisiert teilweise im Schnitt den Aufbau einer Laserschweißvorrichtung,

Fig. 1b    in gegenüber Fig. 1a vergrößertem Maßstab einen Teilschnitt nach Linie I-I in Fig. 1a,

Fig. 1c    eine Schaltung zur Bildung und Anzeige eines Differenzsignals,

Fig. 2a    stark schematisiert teilweise im Schnitt den Aufbau einer Laserschweißvorrichtung, deren Lasermeßstrahl in zeitlichen Abständen bezüglich des zu bearbeitenden Werkstücks eine Querbewegung ausführt,

Fig. 2b    eine Teilansicht gemäß Linie II-II in Fig. 2a,

Fig. 2c    einen Teilschnitt gemäß Linie III-III in Fig. 2b,

Fig. 3a    eine der Fig. 2b ähnliche Teilansicht für eine Laserschweißvorrichtung mit Lichtleitereinheiten, welche unmittelbar einem Detektor zur Erzeugung eines Nachführ-Signals zugeordnet sind, und

Fig. 3b    eine Teilansicht des in Fig. 3a dargestellten Detektors nebst Lichtleitereinheiten, von der Werkstückoberfläche aus betrachtet.

Die in Fig. 1a dargestellte Laserschweißvorrichtung 1, mittels der sich quer zur Zeichenebene nebeneinanderliegende Bestandteile eines Werkstücks 2 miteinander verschweißen lassen, weist die folgenden Hauptbestandteile auf: Eine Arbeitslasereinheit 3, ein Laserstrahl-Führungsrohr 4, einen Arbeitskopf 5 und einen an dessen Unterseite befestigten trichterförmigen Schweißadapter 6. Der aus der Arbeitslasereinheit 3 austretende Laserarbeitsstrahl 7 wird über im Arbeitskopf 5 angeordnete Umlenk- und Fokussierspiegel 8 bzw. 9 umgelenkt und auf die Schweißstelle 10 fokussiert; die Achse 7a des aus dem Schweißadapter 6 austretenden Laserarbeitsstrahls ist dabei lotrecht zur Ebene des Werkstücks 2 ausgerichtet.

Der Arbeitskopf 5 ist an seiner Unterseite beiderseits des Schweißadapters 6 mit Tragarmen 11 und 12 ausgestattet, die eine Meßlasereinheit in Form einer Laserdiode 13 bzw. eine Sensoreinheit 14 tragen. Letztere ist bezüglich des Tragarms in Richtung ihrer Längserstreckung und quer dazu verschiebbar gehalten, so daß sie in der erforderlichen Weise justiert und anschließend in der Justierstellung festgehalten werden kann. Die Teile 13 und 14 sind jeweils bezüglich der Achse 7a geneigt angeordnet; die Anordnung und Neigung der Laserdiode 13 ist dabei derart gewählt, daß der von ihr ausgehende Lasermeßstrahl 15 in einer Entfernung a (in der Größenordnung von wenigen Millimetern) von der Achse 7a auf die Oberfläche 2a des Werkstücks 2 auftrifft und dort einen Strahlungsfleck 15a bildet.

Die Sensoreinheit 14, in welche das vom Werkstück 2 reflektierte Laserlicht 15b eintritt, weist in einem Zylindergehäuse 14a einen Filter 14b und eine Optik 14c auf, mittels welcher das Laserlicht 15b auf eine Beobachtungsebene 14d abgebildet wird. Der der Optik 14c vorgelagerte Filter 14b ist derart beschaffen, daß er für den Wellenbereich des Lasermeßstrahls 15 durchlässig ist und Störlicht (insbesondere aus dem Bereich der Schweißstelle 10) weitgehend ausschließt.

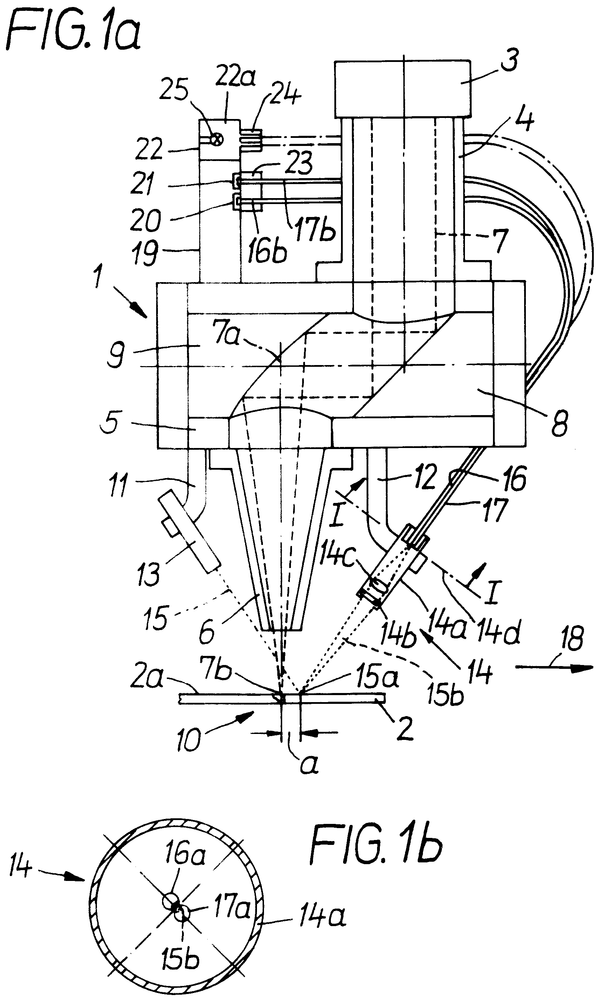

In der Beobachtungsebene 14d ist die Eingangsebene 16a, 17a (vgl. dazu Fig. 1b) zweier Lichtleitereinheiten 16 und 17 angeordnet, die - in Richtung der Arbeitsbewegung (Pfeil 18) der Laserbearbeitungsvorrichtung 1 gesehen - hintereinanderliegen und der Neigung der Beobachtungsebene 14d entsprechend übereinander angeordnet sind. Diese Ausbildung bewirkt, daß der auf die Beobachtungsebene 14d (und damit auf die Eingangsebenen 16a, 17a) abgebildete Strahlungsfleck 15a die Lichtleitereinheiten 16 und 17 nur dann gleichermaßen stark ausleuchtet, falls die Laserschweißvorrichtung 1 exakt den Soll-Abstand vom Werkstück 2 aufweist, der durch die Justierstellung der Sensoreinheit 14 vorgegeben ist: Bei zu geringer Arbeitshöhe wird die bezüglich der Beobachtungsebene 14d untenliegende Lichtleitereinheit 17, bei zu großer Arbeitshöhe die obere Lichtleitereinheit 16 stärker ausgeleuchtet als die jeweils andere Lichtleitereinheit.

Die Ausleuchtung der Eingangsebenen 16a und 17a vermittelt also eine Aussage darüber, ob bzw. in welcher Weise und in welchem Ausmaß der derzeitige Ist-Abstand zwischen der Beobachtungsebene 14d und der Werkstückoberfläche 2a von einem vorgegebenen Soll-Abstand abweicht.

Auf der Oberseite des Arbeitskopfes 5 ist eine Halterung 19 angeordnet, welche zwei Detektoren in Gestalt von Fotodioden 20, 21 und eine Kammer 22 aufnimmt; den Bestandteilen 20, 21 einerseits und 22 andererseits ist jeweils eine Doppelbuchse 23 bzw. 24 vorgeschaltet, über welche die Lichtleitereinheiten 16, 17 wechselweise und wirkungsmäßig entweder an die Fotodioden oder an den Innenraum 22a der Kammer 22 angeschlossen werden können; letztere ist mit einer getrennt zuschaltbaren Justier-Lichtquelle 25 ausgestattet, mittels welcher die Ausgänge 16b, 17b der beiden Lichtleitereinheiten zum Zwecke der Ausrichtung der Sensoreinheit 14 ggf. ausgeleuchtet werden können. Durch Umstecken der Ausgänge 16b, 17b entweder in die Doppelbuchse 23 oder die Doppelbuchse 24 läßt sich die Laserschweißvorrichtung 1 also in den Betriebszustand zur Erfassung der Höhenlage oder zur Einstellung der Sensoreinheit 14 versetzen.

In dem in Fig. 1a dargestellten Betriebszustand werden die Fotodioden 20, 21 - abhängig von den Übertragungseigenschaften der Lichtleitereinheiten 16 und 17 - mit dem reflektierten Laserlicht beaufschlagt, welches im Bereich der Beobachtungsebene 14d an den Eingangsebenen 16a und 17a anliegt. Die mittels der Fotodioden erzeugten Signale erfahren in einer nachgeschalteten Differenzschaltung 26, die als Brückenschaltung ausgebildet ist, eine Umwandlung in ein Differenzsignal DS; dieses wird in einer Anzeigeeinheit 27 sichtbar und damit für die Beeinflussung der Höhenlage der Laserschweißvorrichtung 1 auswertbar gemacht (vgl. dazu Fig. 1c).

Falls die Eingangsebenen 16a und 17a im gleichen Umfang ausgeleuchtet sind, erzeugt die Differenzschaltung 26 das Differenzsignal "Null" als Anzeichen dafür, daß der Ist-Abstand "Beobachtungsebene 14d/Werkstückoberfläche 2a" mit dem Soll-Abstand übereinstimmt, welcher durch die Justierstellung der Sensoreinheit 14 vorgegeben ist. Eine unterschiedlich starke Ausleuchtung der Eingangsebenen 16a und 17a hat zur Folge, daß das von der Differenzschaltung 26 erzeugte Differenzsignal DS eine vom Nullwert abweichende Größe mit einem positiven oder negativen Vorzeichen aufweist.

Unabhängig von der Verwendung der Anzeigeeinheit 27 kann das Differenzsignal DS selbstverständlich zur Ansteuerung eines Verstellantriebs Verwendung finden, welcher selbsttätig die Höhenlage der Laserschweißvorrichtung 1 unter Berücksichtigung der etwa festgestellten Abweichung anpaßt.

Nach dem Umstecken der Lichtleitereinheiten 16, 17 in die Doppelbuchse 24 - die sich daraus ergebende Anordnung der Lichtleitereinheiten ist in Fig. 1a strichpunktiert angedeutet - kann die Sensoreinheit 14 sozusagen in umgekehrter Richtung betrieben werden. Das von der Justier-Lichtquelle 25 ausgehende Justierlicht beaufschlagt dabei die Ausgänge 16b, 17b und erzeugt unter Einwirkung der Sensoreinheit 14 auf der Werkstückoberfläche 2a ein Abbild der Eingangsebenen 16a, 17a. Die erforderliche Ausrichtung der Sensoreinheit 14 läßt sich unter Benutzung des Abbildes in einfacher Weise dadurch herbeiführen, daß dessen Mittellinie mit dem Mittelpunkt des Strahlungsflecks 15a zur Deckung gebracht wird. Sobald dies geschehen ist, kann die Sensoreinheit 14 in der dann eingenommenen Justierstellung arretiert und durch Umstecken der Lichtleitereinheiten 16, 17 in die Doppelbuchse 23 der Betriebszustand zur Erfassung der Höhenlage bezüglich der Werkstückoberfläche 2a hergestellt werden.

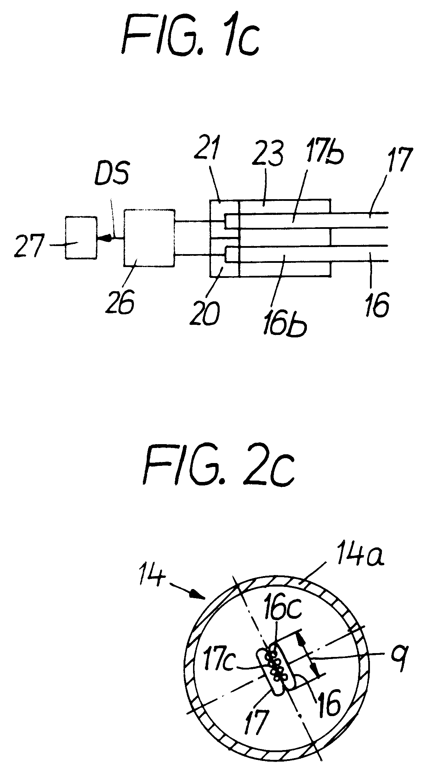

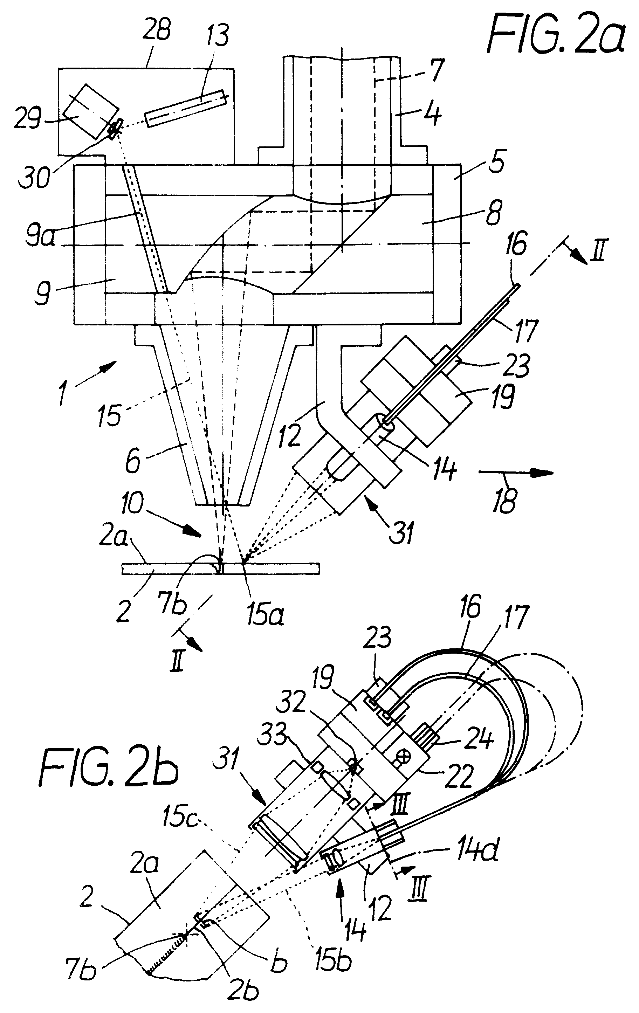

Bei der Ausführungsform gemäß Fig. 2a bis 2c ist die Laserdiode 13 in einem Gehäuse 28 auf der Oberseite des Arbeitskopfes 5 angebracht, welches gleichzeitig einen mittels eines Scanners oder Motors 29 in Schwingungen oder Drehungen versetzten Taumelspiegel 30 aufweist. Der von der Laserdiode 13 ausgehende Lasermeßstrahl 15 gelangt durch eine Bohrung 9a im Umlenkkörper 9 sowie durch das Führungsrohr 6 auf die Werkstückoberfläche 2a und bildet dort einen Strahlungsfleck 15a; dieser führt unter Einwirkung des schwingenden oder umlaufenden Taumelspiegels 30 bezüglich der Nahtfuge 2b (vgl. dazu Fig. 2b) einen Querhub aus, dessen Breite b größer ist als die entsprechende Abmessung der Nahtfuge 2b. Das von der Werkstückoberfläche 2a reflektierte Laserlicht - hier zur Erleichterung des Verständnisses mit 15c bezeichnet - wird in an sich bekannter Weise von einer Sensoreinheit 31 erfaßt und mittels eines optoelektronischen Detektors 32 in ein Signal umgewandelt, welches die Nachführung der Laserschweißvorrichtung 1 bezüglich der Nahtfuge 2b ermöglicht. Die Ausbildung der Teile 31 und 32 sowie die Ausgestaltung der Nachführung sind nicht Bestandteil der Erfindung und im übrigen im Grundsatz aus der Druckschrift EP-A2-0 367 924 bekannt.

Abweichend von der Ausführungsform gemäß Fig. 1a, b nimmt der Tragarm 12 unterhalb des Arbeitskopfes 5 neben der Sensoreinheit 14 auch die Bestandteile 31, 32 auf. Darüber hinaus ist die Halterung 19 mit den Fotodioden 20, 21, der Kammer 22 und den zugehörigen Doppelbuchsen 23, 24 an dem Gehäuse 33 befestigt, welches die Bestandteile 31 und 32 enthält.

Mit Rücksicht darauf, daß der Lasermeßstrahl 15 die bereits erwähnte Querbewegung ausführt, weisen die beiden Lichtleitereinheiten 16, 17 einen Querschnitt auf, dessen Breite q quer zur Richtung der Arbeitsbewegung der Laserschweißvorrichtung (Pfeil 18) in Fig. 2a) breiter ist als der von der Abbildung des Strahlungsflecks 15a ausgeführte Querhub; der Querhub des Strahlungsflecks selbst ist dabei mit b bezeichnet.

Die Lichtleitereinheiten sind im übrigen derart ausgebildet, daß ihre Querschnitte - die hinsichtlich ihrer Größe und Form übereinstimmen - aus einer Vielzahl kleinflächiger Lichtfasern 16c, 17c (mit einem Durchmesser in der Größenordnung von allenfalls einigen zehntel Millimetern) zusammengesetzt sind.

Wegen der Wirkung der Sensoreinheit 14 und der Lichtleitereinheiten 16, 17 zur Erfassung der Höhenlage der Laserschweißvorrichtung 1 oder zur Justierung der Sensoreinheit 14 wird auf die vorausgehende Beschreibung des Ausführungsbeispiels gemäß Fig. 1a-c Bezug genommen.

Störeinflüsse aus der Umgebung, welche die Meßgenauigkeit bei der Erfassung der Höhenlage beeinträchtigen, lassen sich ggf. dadurch zumindest abmildern, daß der Lasermeßstrahl 15 in seiner Intensität mit mehr als 200 kHz moduliert wird.

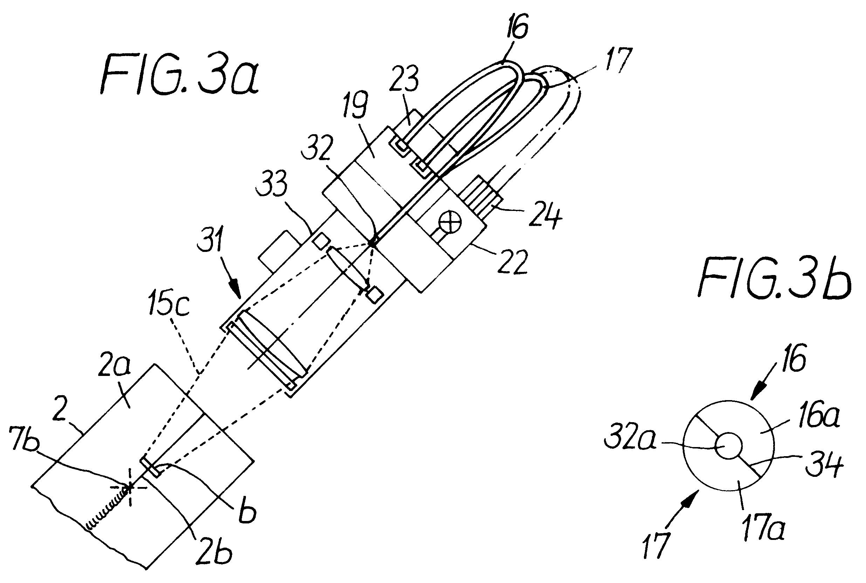

Die Ausführungsform gemäß Fig. 2a, b läßt sich dadurch in konstruktiver Hinsicht vereinfachen, daß auf die Sensoreinheit 14 zur Aufnahme auch der Eingangsebene 16a, 17a der Lichtleitereinheiten 16, 17 verzichtet und diese im Bereich der Sensoreinheit 31 zumindest in der Nähe des optoelektronischen Detektors 32 angeordnet sind. Bei der in Fig. 3a, b dargestellten Ausführungsform des Erfindungsgegenstandes ist die Anordnung der Lichtleitereinheiten 16, 17 derart gewählt, daß deren Eingangsebene 16a, 17a mit der Einkopplungsebene 32a des Detektors 32 zusammenfällt, welche der Werkstückoberfläche 2a zugewandt ist (vgl. dazu Fig. 3b). Die Querschnitte der beiden Lichtleitereinheiten sind jeweils halbkreisförmig ausgebildet und umschließen den Umfang des Detektors 32. Solange die Laserschweißvorrichtung bezüglich der Werkstückoberfläche 2a die gewünschte Höhenlage einnimmt, ist die sich bewegende Abbildung des Strahlungsflecks auf der Werkstückoberfläche 2a bezüglich der Trennungsfläche 34 zwischen den beiden Lichtleitereinheiten symmetrisch angeordnet, so daß diese gleich stark ausgeleuchtet werden. Die Lichtleitereinheiten können dabei entweder einen einteiligen Lichtleitungsquerschnitt aufweisen oder aus einer Vielzahl kleinflächiger Lichtfasern zusammengesetzt sein. Die in Rede stehende Ausführungsform setzt voraus, daß der Strahlungsfleck 15a auf der Werkstückoberfläche 2a (vgl. dazu Fig. 2a) einen geeignet großen Querhub ausführt. Dieser muß so bemessen sein, daß die Abbildung des Strahlungsflecks 15a auf der Werkstückoberfläche 2a außerhalb des Bereichs des Detektors 32 zeitweilig auch die Eingangsebene 16a, 17a erreicht und somit die Überprüfung bzw. Nachstellung der Höhenlage ermöglicht.

## Patentansprüche

1. Einrichtung zur Erfassung der Höhenlage einer Laserbearbeitungsvorrichtung bezüglich eines Werkstücks, mit einer Lasereinheit zur Erzeugung eines Strahlungsflecks auf der Oberfläche des Werkstücks, mit einer Sensoreinheit, in der über einen zwischengeschalteten Filter das vom Strahlungsfleck ausgehende Laserlicht aufgefangen und auf eine bezüglich der Werkstückoberfläche geneigte Beobachtungsebene abgebildet wird, und mit Detektoren, mittels derer die Abbildung in der Beobachtungsebene in Signale umgewandelt wird, aufgrund welcher Änderungen des Abstandes zwischen der Beobachtungsebene und dem Strahlungsfleck feststellbar sind, **gekennzeichnet** durch folgende Merkmale:

- In der Beobachtungsebene (14d) ist die Eingangsebene (16a, 17a) zweier Lichtleitereinheiten (16, 17) - die in Richtung der Arbeitsbewegung (Pfeil 18) der Laserbearbeitungsvorrichtung (1) gesehen hintereinanderliegen - derart angeordnet, daß mit der Zunahme bzw. Abnahme des Abstandes im Vergleich zu einem Soll-Abstand die Eingangsebene (16a bzw. 17a) der oberen bzw. der unteren Lichtleitereinheit (16 bzw. 17) stärker als diejenige der jeweils anderen Lichtleitereinheit mit Laserlicht beaufschlagt ist;
- die Ausgänge (16b, 17b) der Lichtleitereinheiten (16, 17) sind für die Abstandserfassung bzw. für die Justierung der Sensoreinheit (14) derart umsteckbar, daß sie entweder an die Detektoren (20, 21) oder an lichtdurchlässige Verbindungselemente (24) angeschlossen sind, die mittels einer getrennt zuschaltbaren Justier-Lichtquelle (25) ausgeleuchtet werden können; und
- die Ausgänge der Detektoren (20, 21) sind über eine Differenzschaltung (26) zusammengefaßt, welche das Differenzsignal DS "Null" erzeugt, falls die Lage der Werkstückoberfläche (2a) mit deren Soll-Lage übereinstimmt.

2. Einrichtung nach Anspruch 1, dadurch gekennzeichnet, daß die Querschnitte der Lichtleitereinheiten (16, 17) übereinstimmen und größer sind als der Querschnitt der Abbildung des Strahlungsflecks (15a).

3. Einrichtung nach Anspruch 1 und/oder 2, dadurch gekennzeichnet, daß die Querschnitte der beiden Lichtleitereinheiten (16, 17) jeweils aus kleinflächigen Lichtfasern (16c, 17c) zusammengesetzt sind.

4. Einrichtung nach zumindest einem der vorhergehenden Ansprüche, dadurch gekennzeichnet, daß die Differenzschaltung (26) eine Brückenschaltung umfaßt, die einen Ausgleich zwischen den beiden Lichtleitereinheiten (16, 17) ermöglicht.

5. Einrichtung nach zumindest einem der vorhergehenden Ansprüche, dadurch gekennzeichnet, daß der Strahlungsfleck (15a) mittels einer Meßlasereinheit (13) erzeugt wird.

6. Einrichtung nach Anspruch 5, dadurch gekennzeichnet, daß die Meßlasereinheit (13) derart an der Laserbearbeitungsvorrichtung (1) angeordnet ist, daß der Strahlungsfleck (15a) zwischen drei und zehn mm vorlaufend vor dem Brennfleck (7b) der Arbeitslasereinheit (3) liegt.

7.  Einrichtung nach zumindest einem der Ansprüche 5 bis 6, gekennzeichnet durch eine Meßlasereinheit (13), deren Strahlungsfleck (15a) seitlich versetzt zur mittels der Arbeitslasereinheit (3) beaufschlagten Bearbeitungsstelle (10) liegt.

8.  Einrichtung nach zumindest einem der vorhergehenden Ansprüche 1 bis 4, mit einer der Arbeitslasereinheit zugeordneten Justierlasereinheit, dadurch gekennzeichnet, daß die Sensoreinheit (14) anhand des von der Justierlasereinheit erzeugten Justier-Strahlungsflecks ausrichtbar ist.

9.  Einrichtung nach zumindest einem der Ansprüche 1 bis 4 sowie 8, dadurch gekennzeichnet, daß die Arbeitslasereinheit (3) den von der Sensoreinheit (14) erfaßten Strahlungsfleck erzeugt.

10. Einrichtung nach zumindest einem der Ansprüche 5 bis 7, mit einer Meßlasereinheit, deren Strahlungsfleck in vorgegebenen Zeitabständen quer über die Bearbeitungsstelle hinweg bewegbar ist, **dadurch gekennzeichnet**, daß die beiden Lichtleitereinheiten (16, 17) jeweils einen Querschnitt aufweisen, dessen Breite (q) quer zur Richtung der Arbeitsbewegung (Pfeil 18) der Laserbearbeitungsvorrichtung (1) zumindest ebenso groß ist wie der von der Abbildung des Strahlungsflecks (15a) ausgeführte Querhub (b).

11. Einrichtung nach Anspruch 10, mit einer einen optoelektronischen Detektor aufweisenden Sensoreinheit, über welche das von der Werkstückoberfläche reflektierte Laserlicht in ein Signal zur Nachführung der Laserbearbeitungsvorrichtung bezüglich der Nahtfuge umwandelbar ist, **dadurch gekennzeichnet**, daß die Eingangsebene (16a, 17a) der Lichtleitereinheiten (16, 17) dem Detektor (32) benachbart liegt.

12. Einrichtung nach Anspruch 11, dadurch gekennzeichnet, daß die Querschnitte der Lichtleitereinheiten (16, 17) jeweils halbkreisförmig ausgebildet sind und den Umfang des Detektors (32) umschließen.

13. Einrichtung nach zumindest einem der vorhergehenden Ansprüche, dadurch gekennzeichnet, daß der Meßstrahl (15) der Meßlasereinheit (13) oder der Justierlasereinheit hinsichtlich seiner Intensität moduliert ist.

# FIG.1a

# FIG.1b

# FIG. 1c

# FIG. 2c

FIG.2a

FIG.2b

# FIG.3a

# FIG.3b

EP 0 490 146 A2